# FASCICULE DE BREVET EUROPEEN

(11) **EP 2 196 935 B1**
(45) Date de publication et mention de la délivrance du brevet: **29.02.2012**
(21) Numéro de dépôt: 09178139.3
(22) Date de dépôt: 07.12.2009
(51) Int. Cl.: G06F 21/00, G06F 21/20

(54) **Procédé de protection d'une clef USB sécurisée.**
Verfahren zum Schutz eines gesicherten USB-Schlüssels
Method for protecting a secure USB key

(30) Priorité: 11.12.2008 FR 0858478
(43) Date de publication de la demande: 16.06.2010
(73) Titulaire: Oberthur Technologies, 92300 Levallois-Perret (FR)
(72) Inventeur: Jayet, Stéphane, 69330, Meyzieu (FR)
(74) Mandataire: Delumeau, François Guy

(56) Documents cités:
- EP-A2- 1 840 783
- WO-A2-2008/024644
- FR-A1- 2 910 666
- US-A1- 2006 208 853
- US-A1- 2007 120 643
- US-A1- 2008 263 364
- SMITH S L: "AUTHENTICATING USERS BY WORD ASSOCIATION" COMPUTERS & SECURITY, ELSEVIER SCIENCE PUBLISHERS. AMSTERDAM, NL, vol. 6, no. 6, 1 décembre 1987 (1987-12-01), pages 464-470, XP000050578 ISSN: 0167-4048

## Description

### Arrière-plan de l'invention

L'invention se situe dans le domaine de la protection des clefs USB.

Plus précisément, elle vise à protéger une fonction qui s'exécute sur une clef USB contre une attaque malveillante venant de la station hôte à laquelle la clef est connectée.

Dans cette demande de brevet, la fonction protégée peut être de type quelconque. Il peut notamment s'agir d'une fonction d'accès en lecture ou en écriture à une mémoire de masse comprise dans la clef USB, ou d'une fonction d'authentification.

Un type d'attaque pouvant viser les clefs USB est connu de l'homme du métier sous le nom de « déni de service ». D'une façon générale, ces attaques consistent à envoyer des données erronées à la clef USB pour stimuler l'exécution de la fonction embarquée sur la clef dans un but malveillant.

On connaît par exemple, des clefs USB (appelées aussi « dongle » ou verrous matériels) utilisées pour authentifier l'utilisateur d'une application logicielle s'exécutant sur la station hôte à laquelle elle est connectée, et éventuellement bloquer l'exécution de cette application en cas d'échec de l'authentification. L'authentification peut par exemple consister à comparer un code saisi par l'utilisateur au niveau de la station hôte avec une valeur mémorisée par la clef USB. Dans ce premier exemple, une attaque par déni de service peut consister à envoyer des codes erronés successifs à la clef USB, jusqu'à entraîner le blocage de l'application logicielle.

On connaît également des clefs USB aptes à crypter un message reçu de la station hôte en utilisant une clef secrète. Dans ce deuxième exemple, une attaque par déni de service peut consister à envoyer à une clef USB des messages en nombre élevé et/ou en fréquence élevée, à savoir en nombre ou en fréquence supérieur(e) aux conditions d'utilisation normales.

Le document US 2008/0263364 A1 divulgue également une clef USB apte à vérifier la présence d'un utilisateur pendant une phase d'authentification en exigeant de l'utilisateur qu'il appuie sur un bouton-poussoir disposé sur la clef USB.

Une solution connue sous le nom de « Captcha » pour lutter contre les attaques par déni de service (notamment pour lutter contre les « spams » ou pourriel) consiste à vérifier que les données envoyées par un ordinateur sont effectivement saisies par un utilisateur humain et non pas générées automatiquement par un robot logiciel s'exécutant sur cet ordinateur.

Malheureusement, ces solutions ne sont pas parfaites, des robots logiciels de plus en plus perfectionnés réussissent à reconnaître les lettres déformées avec un bon taux de réussite.

### Objet et résumé de l'invention

L'invention concerne une clef USB sécurisée comportant :
- des moyens d'obtention d'au moins un paramètre d'usage d'une fonction apte à s'exécuter sur la clef ;
- des premiers moyens de contrôle aptes à empêcher l'exécution de ladite fonction sur détection d'au moins une condition de blocage dépendante de ce paramètre;
- des deuxièmes moyens de contrôle aptes à activer les premiers moyens de contrôle uniquement sur détection d'au moins un événement déterminé indépendant de la fonction précitée, ces deuxièmes moyens de contrôle étant actifs même lorsque la condition de blocage n'est pas remplie.

Selon un principe connu, les premiers moyens de contrôle sont aptes à empêcher l'exécution de la fonction sur détection d'une condition de blocage dépendante d'un paramètre d'usage de la fonction.

Ces moyens peuvent par exemple utiliser une condition de blocage dépendant d'un témoin d'usage de la fonction, par exemple un compteur d'usage, une fréquence d'usage, ou une date d'usage de la fonction.

Mais dans l'art antérieur, les premiers moyens de contrôle sont toujours actifs, du moins tant que la fonction n'est pas bloquée. Il a été démontré que de tels moyens étaient très fragiles face aux attaques par déni de service.

Conformément à l'invention, ces premiers moyens de contrôle sont eux-mêmes sous le contrôle de deuxièmes moyens de contrôle mis en oeuvre par la clef USB sécurisée elle-même.

Plus précisément, les deuxièmes moyens de contrôle n'autorisent l'exécution des premiers moyens de contrôle que lorsqu'un événement déterminé, indépendant cette fois de la fonction, est détecté.

Dans un mode particulier de réalisation, les deuxièmes moyens de contrôle activent les premiers moyens de contrôle uniquement pendant une durée déterminée comptée à partir de la détection de l'événement déterminé.

Dans un mode particulier de réalisation, cette durée est configurable.

Nous allons maintenant donner quatre exemples d'un tel événement :

Selon un premier mode de réalisation, les deuxièmes moyens de contrôle comportent un capteur et sont aptes à activer ou non les premiers moyens de contrôle en fonction de l'état du capteur.

Préférentiellement, le capteur permet de s'assurer que l'utilisateur est physiquement à proximité de la clef USB. Par exemple, le capteur est un bouton-poussoir et les premiers moyens de contrôle ne sont mis en oeuvre que lorsqu'un utilisateur presse ce bouton. Dans un autre exemple, le capteur peut être constitué par un capteur d'empreintes digitales.

Dans un deuxième mode de réalisation de l'invention, la clef USB comporte un afficheur d'un premier message et des moyens pour recevoir un deuxième message émis par la station hôte, les deuxièmes moyens de contrôle étant aptes à comparer ces messages et à activer les premiers moyens de contrôle lorsque ces messages sont identiques.

Dans un troisième mode de réalisation, la clef USB comporte une table associant au moins un premier message à au moins un deuxième message, des moyens de présentation d'un de ces premiers messages à l'utilisateur et des moyens de réception d'un message émis par la station hôte, lesdits deuxièmes moyens de contrôle étant aptes à activer lesdits premiers moyens de contrôle si le message reçu de la station hôte est associé avec le message à la station hôte dans la table.

Typiquement, le premier message peut consister en une question posée à l'utilisateur de la station hôte et les deuxièmes messages des réponses possibles à cette question.

Là encore, l'envoi de réponses erronées par la station hôte n'entraîne pas le blocage de l'application, mais seulement l'inhibition des premiers moyens de contrôle.

Dans un quatrième mode de réalisation, la clef USB comporte des moyens de communication aptes à échanger des informations d'authentification avec un dispositif externe, les deuxièmes moyens de contrôle activant ou non les premiers moyens de contrôle en fonction de ces informations d'authentification.

Le dispositif externe peut par exemple être constitué par une carte à puce sans contact et les informations d'authentification peuvent être des informations d'authentification de cette carte à puce auprès de la clef USB sécurisée.

L'invention est particulièrement bien adaptée à protéger les clefs USB qui utilisent une valeur secrète protégée par les premiers moyens de contrôle : clef cryptographique, numéro d'identification personnel (code PIN), ...

En effet, si la fonction protégée de la clef USB est une fonction d'authentification par comparaison d'un code PIN, des codes PIN erronés émis par la station hôte seront ignorés à moins qu'un utilisateur ait saisi au niveau de la station hôte, un message affiché sur la clef USB, ce message n'étant pas transmis à la station hôte.

En variante, des informations de contrôle peuvent se limiter à un identifiant du dispositif externe, cet identifiant étant vérifié par les moyens d'inhibition de la clef USB.

Corrélativement, l'invention concerne un procédé de protection d'une clef USB sécurisée comportant :
- une étape d'obtention d'au moins un paramètre d'usage d'une fonction apte à s'exécuter sur la clef ;
- une étape de détection d'au moins une condition de blocage dépendante de ce paramètre, et, le cas échéant, une première étape de contrôle apte à empêcher l'exécution de ladite fonction ;
- une étape de détection d'au moins un événement déterminé indépendant de la fonction ;
- une deuxième étape de contrôle apte à autoriser l'exécution de ladite première étape de contrôle uniquement en cas de détection de l'événement déterminé, cette deuxième étape de contrôle étant active même lorsque la condition de blocage n'est pas remplie.

Conformément à l'invention, la première étape de contrôle est apte à autoriser l'exécution de la fonction seulement lorsque l'événement est détecté et lorsque la condition de blocage n'est pas remplie.

Les avantages et caractéristiques particuliers du procédé de protection sont les mêmes que ceux de la clef USB mentionnés précédemment.

En particulier, l'étape de détection d'au moins un événement déterminé indépendant de ladite fonction peut consister à :
- détecter l'état d'un capteur de ladite clef USB ;
- vérifier qu'un message reçu de la station hôte est identique à un message affiché sur un afficheur de la clef USB;
- vérifier qu'un message reçu de la station hôte est associé, dans une table de la clef USB avec un message présenté à l'utilisateur ;
- vérifier des informations d'authentification échangées avec un dispositif externe.

Dans un mode particulier de réalisation, les différentes étapes du procédé de protection sont déterminées par des instructions de programmes d'ordinateurs.

En conséquence, l'invention vise aussi un programme d'ordinateur sur un support d'informations, ce programme étant susceptible d'être mis en oeuvre dans une clef USB sécurisée, ce programme comportant des instructions adaptées à la mise en oeuvre des étapes d'un procédé de protection tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par une clef USB, et comportant des instructions d'un programme d'ordinateur tel que mentionné ci-dessus.

Le support d'informations peut être n'importe quelle entité ou dispositif capable de stocker le programme.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1 à 4 représentent quatre clefs USB conformes à l'invention dans des modes particuliers de réalisation ; et
- la figure 5 représente, sous forme d'organigramme, les principales étapes d'un procédé de protection conforme à l'invention.

### Description détaillée de plusieurs modes de réalisation

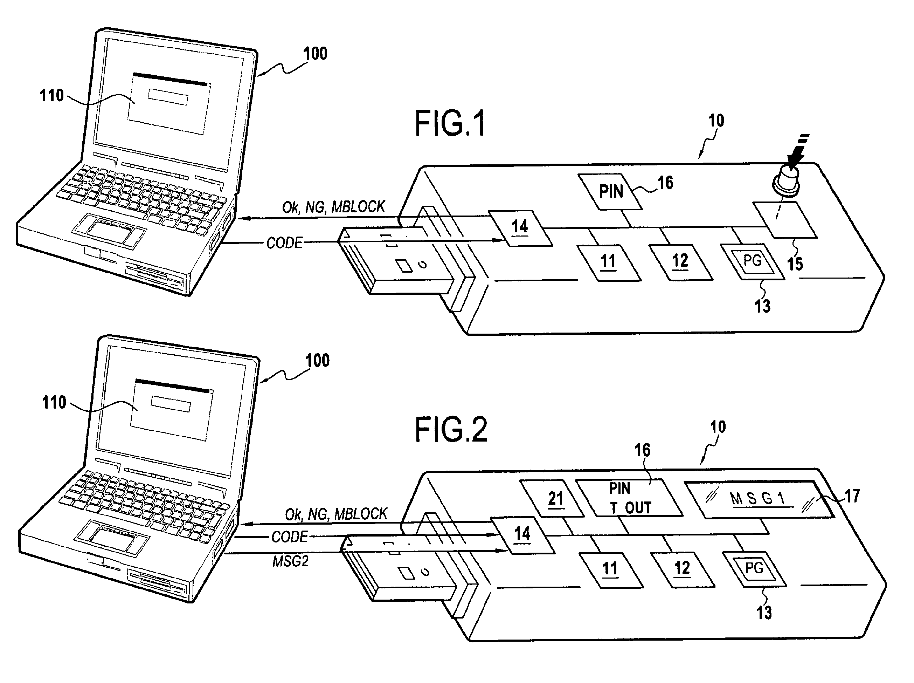

La **figure 1** représente une clef USB 10 sécurisée conforme à l'invention dans un premier mode de réalisation.

Cette clef USB 10 comporte un processeur 11, une mémoire vive de type RAM 12, une mémoire morte de type ROM 13 et une mémoire non volatile réinscriptible de type flash 16 et des moyens 14 de communication avec une station hôte 100 sur laquelle s'exécute une application logicielle 110.

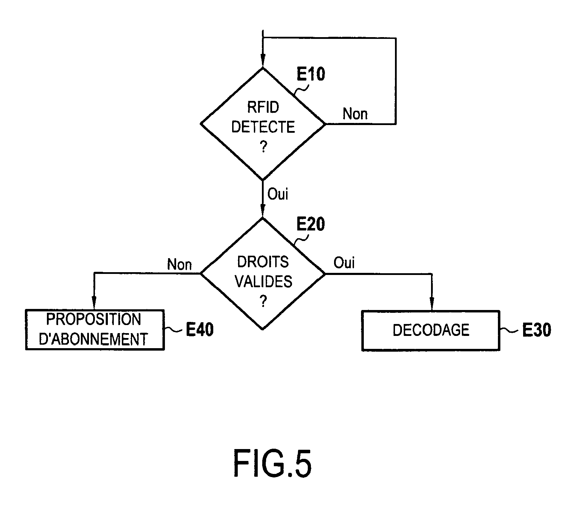

La mémoire morte 13 constitue un support d'enregistrement conforme à l'invention, sur lequel est enregistré un programme d'ordinateur PG conforme à l'invention, ce programme comportant des instructions pour exécuter les étapes d'un procédé de protection conforme à l'invention, ces étapes étant représentées sous forme d'organigramme à la figure 5 qui sera décrite ultérieurement.

Dans l'exemple de réalisation décrit ici, la clef USB est utilisée comme mémoire de masse externe à la station hôte 100, les accès à cette mémoire étant autorisés uniquement lorsqu'un code saisi au clavier de la station hôte 100 et reçu par les moyens 14 de communication de la clef USB correspond à un code PIN mémorisé dans la mémoire flash 16.

La comparaison d'un code émis par la station hôte avec le code PIN est un premier contrôle au sens de l'invention. Plus précisément, ce premier contrôle, effectué par exécution du programme d'ordinateur PG comporte les opérations suivantes :
- réception d'un code émis par la station hôte et comparaison avec le code PIN mémorisé dans la mémoire flash 16 ;
- si le code émis par la station hôte 100 est valide, le processeur 11 retourne à la station hôte un message OK et positionne un drapeau (en anglais « flag ») dans la mémoire flash 16 pour autoriser l'accès à la mémoire de masse ;
- si le code est invalide, le processeur 11 retourne un message NG à la station hôte 100 ; et
- si le nombre de codes invalides reçus par la clef USB est supérieur à un nombre déterminé, le processeur 11 positionne un drapeau (en anglais « flag ») dans la mémoire flash 16 pour interdire tout futur accès à la mémoire de masse et toute comparaison d'un code éventuellement reçu avec le code PIN.

Conformément à l'invention, la clef USB 10 comporte des deuxièmes moyens de contrôle pour activer ou non les premiers moyens de contrôle.

Dans le mode de réalisation de la figure 1, la clef USB comporte à cet effet un bouton-poussoir associé à un capteur 15, la comparaison étant effectuée uniquement lorsqu'un utilisateur presse le bouton-poussoir.

Ainsi, si le bouton-poussoir est relâché, l'envoi de codes invalides par l'application 110 de la station hôte 100 est sans effet.

La **figure 2** représente une clef USB conforme à l'invention dans un deuxième mode de réalisation.

Dans ce mode de réalisation, la clef USB 10 comporte une horloge 21 et un afficheur 17 sur lequel peut s'afficher un message MSG1 généré aléatoirement.

Cet afficheur invite l'utilisateur à saisir le message MSG1 au clavier de la station hôte et à actionner un bouton logiciel pour que le message saisi soit envoyé à la clef USB.

Dans ce mode de réalisation de l'invention, le processeur 11 compare le message MSG2 émis par la station hôte 110 avec celui MSG1 affiché sur l'afficheur 17 et active, lorsque ces messages sont identiques, la fonction de comparaison d'un code reçu avec le code PIN pendant une durée T_OUT déterminée mémorisée dans la mémoire non volatile 16, cette durée étant mesurée par l'horloge 21.

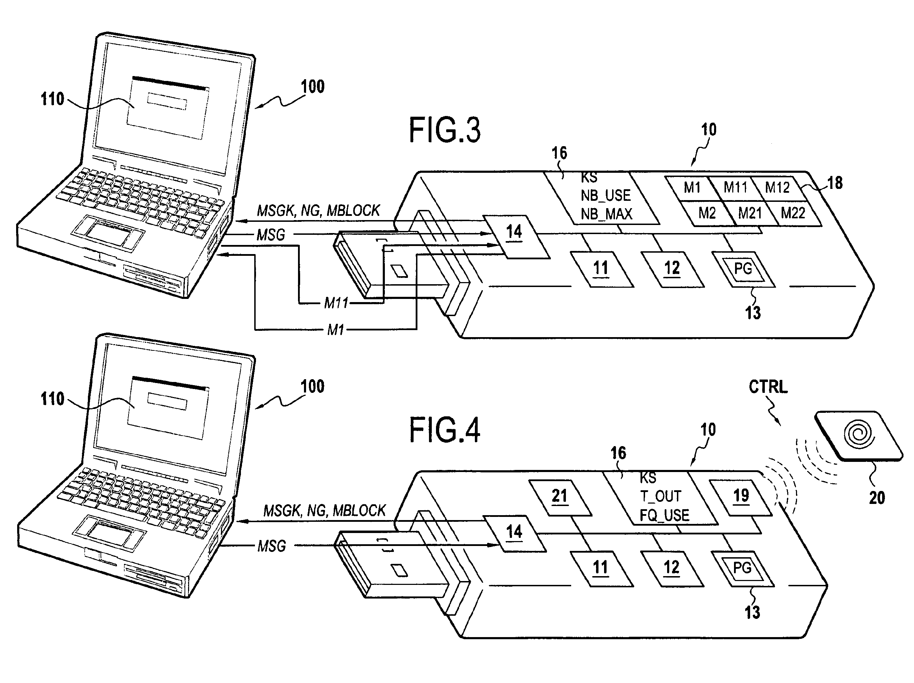

La **figure 3** représente un troisième mode de réalisation de l'invention.

Dans ce mode de réalisation, la clef USB 10 est une clef apte à crypter un message MSG reçu de la station hôte 100 par ses moyens de communication 14 avec une clef secrète KS mémorisée dans sa mémoire flash 16 et à renvoyer le message crypté MSGK à la station hôte 100.

Dans l'exemple de réalisation décrit ici, la clef USB 10 comporte une table 18 dans laquelle des premiers messages M1 (respectivement M2) sont associés à au moins un deuxième message M11, M12 (respectivement M21, M22).

Dans ce mode de réalisation, le processeur 11, mettant en oeuvre le programme d'ordinateur PG, envoie à la station hôte un message choisi aléatoirement parmi la liste des premiers messages M1, M2 et se place en attente d'une réponse d'un message de réponse émis par la station hôte 100.

Dans ce mode de réalisation, la clef USB comporte des premiers moyens de contrôle aptes à mémoriser le nombre NB_USE d'utilisation de la fonction de cryptage et à interdire l'usage de cette fonction si ce nombre dépasse un seuil NB_MAX, ces valeurs étant mémorisées dans la mémoire flash 16.

Dans ce mode de réalisation, les premiers moyens de contrôle sont activés si le message M11 émis par la station hôte 100 est associé, dans la table 18, au message M1 émis vers cette station hôte.

La **figure 4****,** représente un quatrième mode de réalisation de l'invention.

Dans ce mode de réalisation, la clef USB 10 mesure la fréquence FQ_USE d'utilisation de la fonction de cryptage, cette fréquence étant mémorisée dans la mémoire flash 16 et des premiers moyens de contrôle aptes à désactiver la fonction de cryptage si la fréquence d'usage FQ_USE de cette fonction dépasse une valeur seuil.

Dans ce mode de réalisation, la clef USB 10 comporte des moyens de communication avec un dispositif externe 20.

Dans le mode de réalisation décrit ici, le dispositif externe 20 est une carte à puce sans contact et les moyens de communication 19 sont adaptés à communiquer avec cette carte à puce par une communication en champ proche, d'une portée de quelques centimètres, pour s'échanger des informations d'authentification.

Dans un mode de réalisation particulier, ces informations sont des informations d'authentification de la carte à puce sans contact 20 auprès de la clef USB 10.

Quoi qu'il en soit, dans ce quatrième mode de réalisation de l'invention, les premiers moyens de contrôle sont activés, pendant une durée T_OUT déterminée mesurée par une horloge 21, si le dispositif externe 20 est effectivement authentifié.

La **figure 5** représente les principales étapes d'un procédé d'authentification conforme à l'invention.

Ce procédé est mis en oeuvre par une clef USB 10 telle que décrite précédemment en référence aux figures 1 à 4.

Nous supposerons dans cet exemple que la clef USB met en oeuvre une fonction de décodage de télévision numérique terrestre, cette clef pouvant être connectée à un décodeur numérique relié à un téléviseur.

Au cours d'une étape E10, la clef USB 10 vérifie si un événement déterminé indépendant de cette fonction de décodage se produit. Dans l'exemple de réalisation décrit ici, cette étape consiste à authentifier une étiquette électronique RFID incorporée dans le décodeur.

Dans le mode de réalisation décrit ici, le programme de protection boucle sur cette étape E10 si l'événement n'est pas détecté.

Si l'événement est détecté, l'étape E10 est suivie par une étape E20 au cours de laquelle la clef USB vérifie si une condition de blocage dépendante d'un paramètre d'usage de la fonction de décodage est remplie. Il peut s'agir par exemple de vérifier, en fonction de la date courante DC, si l'abonnement de l'utilisateur est toujours valable ou s'il a expiré.

Dans le mode de réalisation décrit ici, on décode le programme de télévision numérique si les droits de l'utilisateur sont valables (étape E30) et, on lui propose (étape E40), lorsque la condition de blocage se produit, de renouveler son abonnement en validant une offre proposée à l'écran du téléviseur par le décodeur.

## Revendications

1. Clef USB sécurisée (10) comportant :
- des moyens d'obtention d'un moins un paramètre d'usage d'une fonction apte à s'exécuter sur ladite clef (10) ;
- des premiers moyens de contrôle aptes à empêcher l'exécution de ladite fonction sur détection d'au moins une condition de blocage dépendante dudit paramètre, ladite condition de blocage dépendant d'au moins une valeur choisie parmi :
- un compteur (NB_USE) d'usage de ladite fonction ;
- une fréquence (FQ_USE) d'usage de ladite fonction ; ou
- une date (DC) d'usage de ladite fonction ;
- des deuxièmes moyens de contrôle aptes à activer lesdits premiers moyens de contrôle uniquement sur détection d'au moins un événement déterminé indépendant de ladite fonction, lesdits deuxièmes moyens de contrôle étant actifs même lorsque ladite condition de blocage n'est pas remplie ; et en ce que :
- lesdits premiers moyens de contrôle sont adaptés à autoriser l'exécution de ladite fonction seulement lorsque ledit événement est détecté et lorsque ladite condition de blocage n'est pas remplie.

2. Clef USB sécurisée (10) selon la revendication 1, dans laquelle ladite fonction utilise une valeur secrète protégée par lesdits premiers moyens de contrôle.

3. Clef USB sécurisée (10) selon la revendication 2, dans laquelle ladite valeur secrète est une clef cryptographique.

4. Clef USB sécurisée (10) selon la revendication 2, dans laquelle ladite valeur secrète est un numéro d'identification personnel.

5. Clef USB selon l'une quelconque des revendications 1 à 4, dans laquelle lesdits deuxièmes moyens de contrôle comportent un capteur (15) et sont aptes à activer ou non lesdits premiers moyens de contrôle en fonction de l'état dudit capteur.

6. Clef USB selon la revendication 5 dans laquelle ledit capteur (15) est un capteur d'empreintes digitales.

7. Clef USB selon l'une quelconque des revendications 1 à 6 comportant un afficheur (17) d'un premier message (MSG1) et des moyens (14) de réception d'un deuxième message (MSG2) émis par une station hôte (100), lesdits deuxièmes moyens de contrôle étant aptes à comparer lesdits messages (MSG1, MSG2) et à activer lesdits premiers moyens de contrôle lorsque lesdits messages sont identiques.

8. Clef USB selon l'une quelconque des revendications 1 à 7 comportant une table (18) associant au moins un premier message (M1) à au moins un deuxième message (M11, M12), des moyens de présentation d'un desdits premiers messages (M1) à l'utilisateur et des moyens (14) de réception d'un message (M11) émis par une station hôte, lesdits deuxièmes moyens de contrôle étant aptes à activer lesdits premiers moyens de contrôle si le message (M11) reçu de ladite station hôte est associé avec le message (M1) envoyé à la station hôte dans ladite table (18).

9. Clef USB selon l'une quelconque des revendications 1 à 7 comportant des moyens de communication (19) aptes à échanger des informations d'authentification avec un dispositif externe (20), et dans laquelle lesdits deuxièmes moyens de contrôle activent lesdits premiers moyens de contrôle en fonction desdites informations d'authentification.

10. Clef USB selon l'une quelconque des revendications 1 à 9, dans laquelle lesdits deuxièmes moyens de contrôle activent lesdits premiers moyens de contrôle uniquement pendant une durée (T_OUT) déterminée comptée à partir de la détection de l'évènement déterminé.

11. Procédé de protection d'une clef USB sécurisée (10) comportant :
- une étape d'obtention d'au moins un paramètre d'usage d'une fonction apte à s'exécuter sur ladite clef (10) ;
- une étape de détection d'au moins une condition de blocage dépendante dudit paramètre,
la condition de blocage dépendant d'au moins une valeur choisie parmi :
- un compteur (NB_USE) d'usage de ladite fonction ;
- une fréquence (FQ_USE) d'usage de ladite fonction ; ou
- une date (DC) d'usage de ladite fonction ;
et, lorsque ladite condition de blocage est détectée, une première étape de contrôle apte à empêcher l'exécution de ladite fonction ;
- une étape de détection d'au moins un événement déterminé indépendant de ladite fonction ;
- une deuxième étape de contrôle apte à autoriser l'exécution de ladite première étape de contrôle uniquement en cas de détection dudit événement déterminé, cette deuxième étape de contrôle étant active même lorsque ladite condition de blocage n'est pas remplie ; et en ce que :
- ladite première étape de contrôle est apte à autoriser l'exécution de ladite fonction seulement lorsque ledit événement est détecté et lorsque ladite condition de blocage n'est pas remplie.

12. Programme d'ordinateur (PG) comportant des instructions pour l'exécution des étapes du procédé de protection d'une clef sécurisée selon la revendication 11 lorsque ledit programme est exécuté par ladite clef USB (10).

13. Support d'enregistrement (13) lisible par une clef USB sécurisée (10) sur lequel est enregistré un programme d'ordinateur comprenant des instructions pour l'exécution des étapes du procédé de protection selon la revendication 11.

## Claims

1. A secure USB key (10) comprising:
· means for obtaining at least one parameter concerning use of a function that can be executed on said key (10);
· first check means suitable for preventing execution of said function on detecting at least one blocking condition that depends on said parameter, wherein said blocking condition depends on a value selected from:
· a counter (NB_USE) of the number of uses of said function;
· a frequency (FQ_USE) of usage of said function; or
· a date (DC) of use of said function ;
· second check means suitable for activating said first check means only on detecting at least one determined event independent of said function, said second check means being active even when said blocking condition is not satisfied;
and wherein:
· said first check means are adapted to authorize execution of said function only when said event is detected and when said blocking condition is not satisfied.

2. A secure USB key (10) according to claim 1, wherein said function uses a secret value protected by said first check means.

3. A secure USB key (10) according to claim 2, wherein said secret value is a cryptographic key.

4. A secure USB key (10) according to claim 2, therein said secret value is a personal identification number.

5. A USB key according to any ane of claims 1 to 4, wherein said second check means include a sensor (15) and are suitable for activating or not activating said first check means as a function of the state of said sensor.

6. A USB key according to claim 5, wherein said sensor is a fingerprint sensor.

7. A USB key according to any one of claims 1 to 6, including a display (17) for displaying a first message (MSG1), and means (14) for receiving a second message (MSG2)issued by a host station (100), said second check means being suitable for comparing said messages (MSG1, MSG2) and for activating said first check means when said messages are identical.

8. A USB key according to any ane of claims 1 to 7, including a table (18) associating at least one first message (M1) with at least one second message (M11, M12), means for presenting one of said first messages (M1) to the user, and means (14) for receiving a message (M11) issued by a host station (100), said second check means being suitable for activating said first check means if the message (M11) received from said host station is associated in said table (18) with the message (M1) sent to the host station.

9. A USB key according to any one of claims 1 to 7, including communications means (19) suitable for exchanging authentication information with an external device (20), and wherein said sue check means activate staid first check means as a function of said cation informations.

10. A USB key according to any one of claims 1 to 9, wherein said second check means activate said first check means only during a predetermined duration (T_OUT) measured from detecting the determined event.

11. A method of protecting a secure USB key (10), the method comprising:
· a step of obtaining at least one parameter concerning the use of a function that can be executed on said key (10); and
· a step of detecting at least one blocking condition that depends on said parameter, wherein said blocking condition depends on a value selected from:
· a counter (NB_USE)of the number of uses of said function;
· a frequency (FQ_USE) of usage of said function; or
· a date (DC) of use of said function ; and, when said blocking condition is detected, a first check step suitable for preventing the execution of said function;
· a step of detecting at least one determined even independent of said function;
· a second check step suitable for authorizing the execution of said first check step only in the event of said determined event being detected, said second check step being active even when said blocking condition is not satisfied;
and wherein:
· said first check step is suitable for authorizing the execution of said function only when said event is detected and said blocking condition is not satisfied.

12. A computer program (PG) including instructions for executing the steps of the method according to claim 11 for protecting a secure key when said program is executed by said USE key (10).

13. A recording medium (13) readable by a secure USB key (10) and having recorded thereon a computer program including instructions for executing the steps of the protection method of claim 11.

## Patentansprüche

1. Gesicherter USB-Schlüssel (10) umfassend:
- Mittel zum Erhalten wenigstens eines Parameters zur Nutzung einer Funktion, die geeignet ist, auf dem Schlüssel (10) ausgeführt zu werden,
- erste Kontrollmittel, die geeignet sind, bei Erfassen wenigstens einer abhängigen Blockierbedingung des Parameters das Ausführen der Funktion zu verhindern, wobei die Blockierbedingung von wenigstens einem Wert abhängt, welcher ausgewählt ist aus:
- einem Zähler (NB_USE) zur Nutzung der Funktion,
- einer Frequenz (FQ_USE) zur Nutzung der Funktion oder
- einem Datum (DC) zur Nutzung der Funktion,
- zweite Kontrollmittel, die geeignet sind, die ersten Kontrollmittel nur bei Erfassen wenigstens eines von der Funktion unabhängigen bestimmten Ereignisses zu aktivieren, wobei die zweiten Kontrollmittel selbst dann aktiv sind, wenn die Blockierbedingung nicht erfüllt ist, und wobei:
- die ersten Kontrollmittel geeignet sind, das Ausführen der Funktion nur dann zuzulassen, wenn das Ereignis erfaßt wird und wenn die Blockierbedingung nicht erfüllt ist.

2. Gesicherter USB-Schlüssel (10) nach Anspruch 1, wobei die Funktion einen durch die ersten Kontrollmittel geschützten geheimen Wert verwendet.

3. Gesicherter USB-Schlüssel (10) nach Anspruch 2, wobei der geheime Wert ein kryptographischer Schlüssel ist.

4. Gesicherter USB-Schlüssel (10) nach Anspruch 2, wobei der geheime Wert eine persönliche Identifikationsnummer ist.

5. USB-Schlüssel nach einem der Ansprüche 1 bis 4, wobei die zweiten Kontrollmittel einen Sensor (15) umfassen und geeignet sind, die ersten Kontrollmittel in Abhängigkeit des Zustandes des Sensors zu aktivieren oder nicht.

6. USB-Schlüssel nach Anspruch 5, wobei der Sensor (15) ein Fingerabdrucksensor ist.

7. USB-Schlüssel nach einem der Ansprüche 1 bis 6, umfassend eine Anzeige (17) für eine erste Nachricht (MSG1) sowie Mittel (14) zum Empfangen einer durch eine Host-Station (100) gesandten zweiten Nachricht (MSG2), wobei die zweiten Kontrollmittel geeignet sind, die Nachrichten (MSG1, MSG2) zu vergleichen und die ersten Kontrollmittel zu aktivieren, wenn die Nachrichten identisch sind.

8. USB-Schlüssel nach einem der Ansprüche 1 bis 7, umfassend eine Tabelle (18), die wenigstens eine erste Nachricht (M1) wenigstens einer zweiten Nachricht (M11, M12) zuordnet, Mittel zum Darstellen von einer der ersten Nachrichten (M1) für den Benutzer, sowie Mittel (14) zum Empfangen einer durch eine Host-Station gesandten Nachricht (M11), wobei die zweiten Kontrollmittel geeignet sind, die ersten Kontrollmittel zu aktivieren, wenn in der Tabelle (18) die von der Host-Station empfangene Nachricht (M11) der an die Host-Station gesandten Nachricht (M1) zugeordnet ist.

9. USB-Schlüssel nach einem der Ansprüche 1 bis 7, umfassend Verbindungsmittel (19), die geeignet sind, Authentifizierungsinformationen mit einer externen Vorrichtung (20) auszutauschen, und wobei die zweiten Kontrollmittel die ersten Kontrollmittel in Abhängigkeit der Authentifizierungsinformationen aktivieren.

10. USB-Schlüssel nach einem der Ansprüche 1 bis 9, wobei die zweiten Kontrollmittel die ersten Kontrollmittel lediglich während einer bestimmten Zeitdauer (T_OUT), die ab Erfassen des bestimmten Ereignisses gezählt wird, aktivieren.

11. Verfahren zum Schutz eines gesicherten USB-Schlüssels (10), umfassend:
- einen Schritt zum Erhalten wenigstens eines Parameters zur Nutzung einer Funktion, die geeignet ist, auf dem Schlüssel (10) ausgeführt zu werden,
- einen Schritt zum Erfassen wenigstens einer abhängigen Blockierbedingung des Parameters,
wobei die Blockierbedingung von wenigstens einem Wert abhängt, welcher ausgewählt ist aus:
- einem Zähler (NB_USE) zur Nutzung der Funktion,
- einer Frequenz (FQ_USE) zur Nutzung der Funktion oder
- einem Datum (DC) zur Nutzung der Funktion,
und dann, wenn die Blockierbedingung erfaßt ist, einen ersten Kontrollschritt, der geeignet ist, das Ausführen der Funktion zu verhindern,
- einen Schritt zum Erfassen wenigstens eines von der Funktion unabhängigen bestimmten Ereignisses,
- einen zweiten Kontrollschritt, der geeignet ist, das Ausführen des ersten Kontrollschrittes nur bei Erfassen des bestimmten Ereignisses zuzulassen, wobei dieser zweite Kontrollschritt selbst dann aktiv ist, wenn die Blockierbedingung nicht erfüllt ist, und wobei:
- der erste Kontrollschritt geeignet ist, das Ausführen der Funktion nur dann zuzulassen, wenn das Ereignis erfaßt wird und wenn die Blockierbedingung nicht erfüllt ist.

12. Computerprogramm (PG), umfassend Befehle zum Ausführen der Schritte des Verfahrens zum Schutz eines gesicherten Schlüssels nach Anspruch 11, wenn das Programm über den USB-Schlüssel (10) ausgeführt wird.

13. Über einen gesicherten USB-Schlüssel (10) lesbarer Aufzeichnungsträger (13), auf dem ein Computerprogramm gespeichert ist, das Befehle zum Ausführen der Schritte des Schutzverfahrens nach Anspruch 11 umfaßt.
